(19) Europäisches Patentamt / European Patent Office / Office européen des brevets

(11) **EP 3 562 082 B1**

(12) **EUROPEAN PATENT SPECIFICATION**

(45) Date of publication and mention
of the grant of the patent:
**09.02.2022  Bulletin 2022/06**

(21) Application number: **17895221.4**

(22) Date of filing: **05.12.2017**

(51) International Patent Classification (IPC):
*H04L 5/00* *(2006.01)*        *H04L 1/18* *(2006.01)*
*H04W 72/12* *(2009.01)*

(52) Cooperative Patent Classification (CPC):
**H04L 1/1861; H04L 1/1896; H04L 5/00;
H04W 72/12**

(86) International application number:
**PCT/CN2017/114635**

(87) International publication number:
**WO 2018/141177 (09.08.2018 Gazette 2018/32)**

(54) **RESOURCE INDICATION METHOD, RESOURCE ACQUISITION METHOD AND RELATED DEVICE**

RESSOURCENINDIKATIONSVERFAHREN, RESSOURCENINDIKATIONSVERFAHREN UND DIESBEZÜGLICHE EINRICHTUNG

PROCÉDÉ D'INDICATION DE RESSOURCES, PROCÉDÉ D'ACQUISITION DE RESSOURCE ET DISPOSITIF ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.02.2017  CN 201710064600**

(43) Date of publication of application:
**30.10.2019  Bulletin 2019/44**

(73) Proprietor: **Huawei Technologies Co., Ltd.
Longgang District
Shenzhen, Guangdong 518129 (CN)**

(72) Inventors:
• **SUN, Hao**
  **Shenzhen**
  **Guangdong 518129 (CN)**
• **GU, Feifei**
  **Shenzhen**
  **Guangdong 518129 (CN)**
• **QU, Bingyu**
  **Shenzhen**
  **Guangdong 518129 (CN)**
• **XUE, Lixia**
  **Shenzhen**
  **Guangdong 518129 (CN)**
• **ZHANG, Xu**
  **Shenzhen**
  **Guangdong 518129 (CN)**

(74) Representative: **Maiwald Patent- und
Rechtsanwaltsgesellschaft mbH
Elisenhof
Elisenstraße 3
80335 München (DE)**

(56) References cited:
WO-A2-2012/094151      CN-A- 102 088 303
CN-A- 102 971 978      US-A1- 2015 103 703
US-A1- 2016 135 170      US-A1- 2016 366 666

## Description

### TECHNICAL FIELD

This application relates to the communications field, and in particular, to a resource indication method, a resource acquisition method, and a related apparatus.

### BACKGROUND

In a wireless communications system such as a long term evolution (Long Term Evolution, LTE) system or a long term evolution advanced (Long Term Evolution Advanced, LTE-A) system, a network device sends downlink control signaling on a physical downlink control channel (Physical Downlink Control CHannel, PDCCH) and sends downlink data on a physical downlink shared channel (Physical Downlink Share CHannel, PDSCH), and a terminal device feeds back hybrid automatic repeat request (Hybrid Automatic Repeat reQuest, HARQ) acknowledgement/negative acknowledgement (Acknowledgement/Negative Acknowledgement, ACK/NACK) information on a physical uplink control channel (Physical Uplink Control CHannel, PUCCH) after receiving the downlink data.

In a 5G communications system dedicated to higher system performance, a network device reserves sufficient HARQ ACK/NACK feedback resources on a PUCCH resource for each downlink slot through higher layer signaling if a conventional PUCCH resource configuration method applied in an LTE or LTE-A system is still used. Once a quantity of resources occupied by a terminal device scheduled by the network device for downlink data is obviously less than a quantity of PUCCH resources pre-scheduled and pre-configured by the network device, a relatively large quantity of resource fragments are generated in a limited quantity of 5G resources because reserved resources cannot be flexibly configured. Consequently, a large quantity of resources are wasted and cannot be normally configured for the terminal device for use. The US 2015 / 0103703 A1 refers to a resource allocation in different TDD configurations with cross carrier scheduling. The WO 2012 / 094151 A2 refers to a resource allocation for PUCCH format 1B with channel selection in an LTE-A TDD system.

### SUMMARY

Embodiments of the present invention provide a resource indication method, a resource acquisition method, and a related apparatus, so that during configuration of an uplink control channel resource, flexible scheduling can be performed, and a waste of resources and resource fragmentation can be reduced, thereby improving resource utilization.

According to a first aspect, an embodiment of the present invention provides a resource indication method according to claim 1.

According to a second aspect, an embodiment of the present invention provides a resource acquisition method according to claim 3.

According to the resource indication method and the resource acquisition method provided in the embodiments of the present invention, appropriate planning and flexible configuration of resources can be performed, and use of resources can be maximized, so as to improve resource utilization and achieve a relatively desirable technical effect in a 5G communications system.

According to a third aspect, an embodiment of the present invention provides a network device according to claim 6.

According to the network device provided in this embodiment of the present invention, a PUCCH resource can be allocated appropriately and flexibly based on a quantity of terminal devices that are scheduled according to an actual requirement, and use of resources can be maximized, so as to improve resource utilization and reduce resource fragments.

According to a fourth aspect, an embodiment of the present invention provides a terminal device according to claim 8.

A fifth aspect of this application provides a computer program product including an instruction, where when the computer program product runs on a computer, the computer performs the methods according to the foregoing aspects.

The terminal device in this embodiment of the present invention can receive and obtain, based on indication information sent by a network device, a PUCCH resource corresponding to the terminal device, and can flexibly cooperate with scheduling performed by the network device and use the resource based on a quantity of currently scheduled terminal devices, so as to reduce resource fragmentation and improve resource utilization.

According to the foregoing solutions in the present invention, the resource indication method, the resource acquisition method, and the related apparatus are provided. Appropriate planning and flexible scheduling of resources can be performed, signaling overheads and resource fragmentation can be reduced, use of resources can be maximized, and a relatively desirable technical effect can be achieved in a future 5G communications system.

## DESCRIPTION OF DRAWINGS

FIG. 1 is a schematic architectural diagram of a wireless communications system according to an example of the present invention;

FIG. 2 is a schematic flowchart of a resource indication and acquisition method according to an example of the present invention;

FIG. 3 is a schematic diagram of configuration of an uplink control channel resource according to an example of the present invention;

FIG. 4 is a schematic structural diagram of two levels of control channels for downlink transmission according to an example of the present invention;

FIG. 5 is a schematic structural diagram of a network device according to an example of the present invention;

FIG. 6 is a schematic structural diagram of a network device according to an example of the present invention;

FIG. 7 is a schematic structural diagram of a terminal device according to an example of the present invention;

FIG. 8 is a schematic structural diagram of a terminal device according to an example of the present invention;

FIG. 9 is a schematic flowchart of another resource indication and acquisition method according to an example of the present invention;

FIG. 10 is a schematic structural diagram of another network device according to an example of the present invention;

FIG. 11 is a schematic structural diagram of another network device according to an example of the present invention;

FIG. 12 is a schematic structural diagram of another terminal device according to an example of the present invention; and

FIG. 13 is a schematic structural diagram of another terminal device according to an example of the present invention.

## DESCRIPTION OF EMBODIMENTS

A terminal device in the examples of the present invention may be a device that provides voice and/or data connectivity for a user, a handheld device with a radio connection function, or another processing device connected to a radio modem. The wireless terminal may communicate with one or more core networks through a radio access network (such as RAN, Radio Access Network). The wireless terminal may be a mobile terminal, such as a mobile phone (also referred to as a "cellular" phone) and a computer with a mobile terminal, for example, may be a portable, pocket-sized, handheld, computer built-in, or vehicle-mounted mobile apparatus, which exchanges voice and/or data with the radio access network. For example, it may be a device such as a personal communication service (PCS, Personal Communication Service) phone, a cordless telephone set, a Session Initiation Protocol (SIP) phone, a wireless local loop (WLL, Wireless Local Loop) station, or a personal digital assistant (PDA, Personal Digital Assistant). The wireless terminal may also be referred to as a system, a subscriber unit (Subscriber Unit), a subscriber station (Subscriber Station), a mobile station (Mobile Station), a mobile console (Mobile), a remote station (Remote Station), an access point (Access Point), a remote terminal (Remote Terminal), an access terminal (Access Terminal), a user terminal (User Terminal), a user agent (User Agent), a user device (User Device), or user equipment (User Equipment).

A network device (for example, an access point) in the embodiments of the present invention may be a device that communicates with a wireless terminal in an access network through one or more sectors via an air interface. The network device may be configured to mutually convert a received over-the-air frame and an IP packet and serve as a router between the wireless terminal and a rest portion of the access network, where the rest portion of the access network may include an Internet protocol (IP) network. The network device may further coordinate attribute management of the air interface. For example, the network device may be a base transceiver station (BTS, Base Transceiver Station) in GSM or CDMA, may be a NodeB (NodeB) in WCDMA, or may be an evolved NodeB (eNB or e-NodeB, evolutional Node B) in LTE. This is not limited in this application.

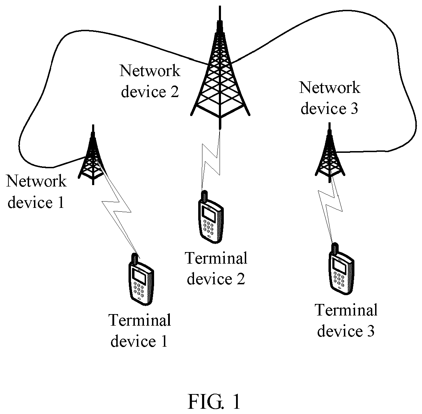

In a schematic architectural diagram of a wireless communications system shown in FIG. 1, network devices, for example, various transmission/reception points (transmission/reception point, TRP) such as a base station and a wireless local area network access point, provide an access service in a licensed spectrum or an access service in an unlicensed spectrum for terminal devices. The terminal devices and the network devices transmit various data such as control signaling or service data through protocol layers on an uplink and a downlink. The control signaling is mainly transmitted on a control channel, and the service data is mainly transmitted on a service channel. These protocol layers include a physical layer, a Media Access Control (media access control, MAC) layer, a Radio Resource Control (radio resource control, RRC) layer, and the like. Data transmitted at any layer is finally carried at the physical layer and is transmitted in wireless space through at least one physical antenna.

A network device semi-statically configures an uplink control channel resource for a terminal device through higher layer signaling, and implicitly indicates, through downlink control signaling sent by the network device, an uplink control channel resource used by the terminal device in an uplink control channel resource pool, so that the terminal device uses the uplink control channel resource to feed back HARQ ACK/NACK information. Implicitly indicated resources are sufficient uplink control channel resources reserved by the network device based on a maximum quantity of terminal devices that can be scheduled in each scheduled slot. This ensures that in the slot, each scheduled terminal device can have sufficient resources to feed back HARQ ACK/NACK information. However, reserved resources cannot be flexibly scheduled after being configured. Therefore, when a quantity of terminal devices scheduled by the network device for downlink data is obviously less than that of uplink control channel resources pre-scheduled and pre-configured by the network device, a relatively large quantity of resource fragments are generated in the reserved resources. This problem is particularly prominent in a 5G system with limited resources.

Optionally, the uplink control channel resource includes a physical uplink control channel PUCCH resource. Descriptions of the foregoing steps and apparatus are all based on a PUCCH resource, but a method and the apparatus of the present invention are not limited to using the PUCCH resource.

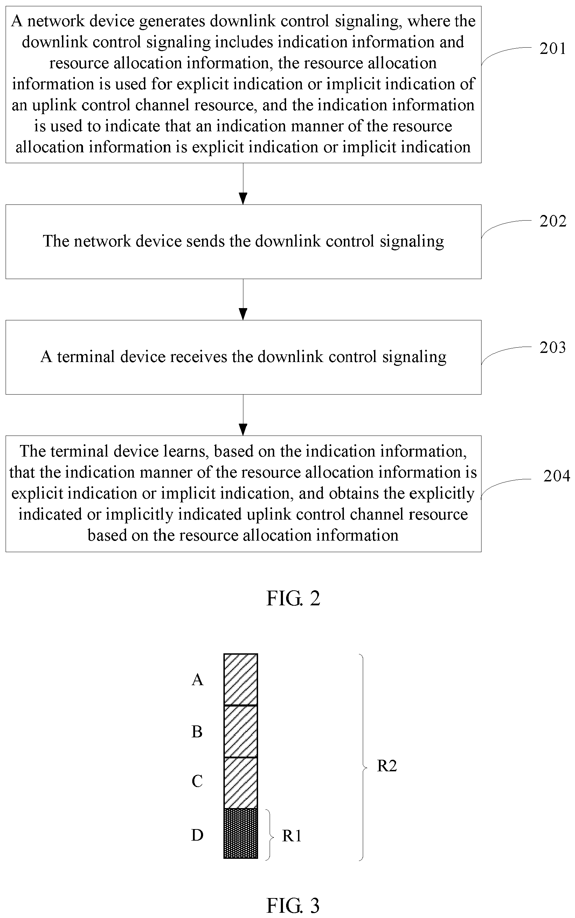

In view of the foregoing technical problem, an aspect of the examples of the present invention provides a resource indication and acquisition method. As shown in FIG. 2, the method includes the following steps:

201. A network device generates downlink control signaling, where the downlink control signaling includes indication information and resource allocation information, the resource allocation information is used for explicit indication or implicit indication of an uplink control channel resource, and the indication information is used to indicate whether an indication manner of the resource allocation information is explicit indication or implicit indication.

According to this example of the present invention, the uplink control channel resource includes at least one of a time domain resource, a frequency domain resource, or a code domain resource.

In a conventional method, all uplink control channel resources are PUCCH resources that are used by a terminal device in a PUCCH resource pool and that are implicitly indicated through downlink control signaling. Because these resources are reserved, they cannot be flexibly scheduled after being configured. In the method in this example of the present invention, a network side explicitly or implicitly indicates allocation of a PUCCH resource. Explicit indication indicates that a resource corresponding to a terminal device is directly indicated through signaling, and implicit indication indicates that: A correlation between resource information and the terminal device is established and a resource corresponding to the terminal device is indicated through the correlation. Specifically, an explicitly indicated PUCCH resource is a PUCCH resource that is directly indicated through indication information in downlink control signaling and that is used by the terminal device to perform HARQ ACK/NACK feedback; and an implicitly indicated PUCCH resource is a PUCCH resource that is indicated through a correlation established between resource information of a physical downlink control channel PDCCH and the terminal device and that is used by the terminal device to perform HARQ ACK/NACK feedback.

The downlink control signaling is used to allocate a resource occupied in downlink data transmission, and allocate a resource occupied for feedback of uplink response information. Information in the downlink control signaling includes resource information of a physical downlink control channel PDCCH, and further includes index information of a physical resource block (Physical Resource Block, PRB) occupied by downlink data.

Optionally, implicit indication means a PUCCH resource is obtained by using a function in which a minimum value of an index of a control channel element (Control Channel Element, CCE) occupied in a PDCCH is used as an inlet parameter. For example, Formula 1 is an example of an implicit indication for obtaining a PUCCH resource: $n_{\mathrm{PUCCH}}^{(1,\tilde{p})}$ represents a resource occupied by a PUCCH; $n_{\mathrm{CCE}}$ represents a minimum value of an index of a control channel element CCE occupied by the PDCCH; and $N_{\mathrm{PUCCH}}^{(1)}$ represents a parameter that is configured by a network device for a terminal device through higher layer signaling.

FIG. 3 is a schematic diagram of a PUCCH resource. In a conventional method, FIG. 3 is a whole area of an implicitly indicated PUCCH resource. According to the method in this example of the present invention, the implicitly indicated PUCCH resource is divided into several resource sub-blocks in a pre-defined manner or in a semi-static manner in which higher layer signaling is used. For example, the implicitly indicated PUCCH resource R2 in FIG. 3 is divided into four resource sub-blocks: A, B, C, and D. When a quantity of terminal devices scheduled by a network device for downlink data is obviously less than that of PUCCH resources pre-scheduled and pre-configured by the network device, the resource sub-block D is configured as an explicitly indicated PUCCH resource R1, and the resource sub-blocks A, B, and C are still used as implicitly indicated PUCCH resources. As the quantity of terminal devices scheduled by the network device for the downlink data changes, an indication manner of a PUCCH resource may be dynamically adjusted, and the PUCCH resource can be more flexibly used in this indication manner, so as to further improve resource utilization.

The resource allocation information is carried by a second information bit or a third information bit in the downlink control signaling.

Optionally, in the generated downlink control signaling, if the indication information indicates that the indication manner of the resource allocation information is explicit indication, the resource allocation information is configured to be in the second information bit in the downlink control signaling to indicate an index of an explicitly indicated resource corresponding to a terminal device. Optionally, if the second information bit in the downlink control signaling is configured to be 4 bits, a quantity of terminal devices scheduled by the network device this time is a maximum of $2^4=16$, and index information of resources corresponding to these terminal devices is [0, 15]. To be specific, when the network device performs current downlink scheduling, 4-bit resource allocation information is in one-to-one correspondence with the index information [0, 15] of the explicitly indicated PUCCH resources (as listed in Table 1), to indicate specific resource locations of the terminal devices.

**Table 1 Table of a correspondence between bit information and resource indexes**

| Resource index | Corresponding bit information | Resource index | Corresponding bit information |
|---|---|---|---|
| 0 | 0000 | 8 | 1000 |
| 1 | 0001 | 9 | 1001 |
| 2 | 0010 | 10 | 1010 |
| 3 | 0011 | 11 | 1011 |
| 4 | 0100 | 12 | 1100 |
| 5 | 0101 | 13 | 1101 |
| 6 | 0110 | 14 | 1110 |
| 7 | 0111 | 15 | 1111 |

Optionally, in the generated downlink control signaling, if the indication information indicates that the indication manner of the resource allocation information is implicit indication, the resource allocation information is configured to be in the third information bit in the downlink control signaling to indicate an index of an implicitly indicated resource corresponding to a terminal device. Optionally, if the third information bit in the downlink control signaling is configured to be 2 bits, the network device establishes a correlation between a minimum value of an index of a CCE corresponding to the downlink control signaling and an index of an implicitly indicated PUCCH resource sub-block corresponding to the terminal device.

202. The network device sends the downlink control signaling.

The network device sends, to the terminal device, the downlink control signaling that includes the indication information and the resource allocation information and that is generated in step 201.

The indication information is carried by a first information bit in the downlink control signaling, or the first indication information is carried by a scrambling code used to scramble the downlink control signaling.

All persons skilled in the art know that, more bit information included in the indication information in the downlink control signaling indicates more detailed resource location information of the terminal device, and inevitably, high signaling overheads are caused. Optionally, the indication information in the downlink control signaling is configured to be 1 bit. To be specific, when performing downlink data scheduling on the terminal device, the network device configures 1-bit indication information to indicate whether the indication manner of the resource allocation information is explicit indication or implicit indication. Because the indication information is configured to be only 1 bit, signaling overheads are greatly reduced, so as to improve resource utilization to a greatest extent.

Optionally, the first information bit in the downlink control signaling may implicitly indicate information about the second information bit and the third information bit. If the downlink control signaling is in a single-level control channel for downlink transmission, the first information bit, the second information bit, and the third information bit in the downlink control signaling are independent from each other, and lengths of the second information bit and the third information bit are fixed. Optionally, the second information bit and the third information bit may be multiplexed to improve resource utilization, that is, the network device may configure the second information bit and the third information bit to be a same information bit. If the downlink control signaling is in two levels of control channels for downlink transmission, the first information bit in the downlink control signaling may be placed in a first-level control channel or in a second-level control channel, while the second information bit and the third information can be placed only in the second-level control channel. If the downlink control signaling is in the two levels of control channels for downlink transmission, and the first information bit is placed in the first-level control channel, the lengths of the second information bit and the third information bit may be variable; and if the first information bit is placed in the second-level control channel, the lengths of the second information bit and the third information bit can only be fixed. The single-level control channel means that a control channel on a downlink includes a control area, and the two levels of control channels mean that a control channel on a downlink includes two control areas.

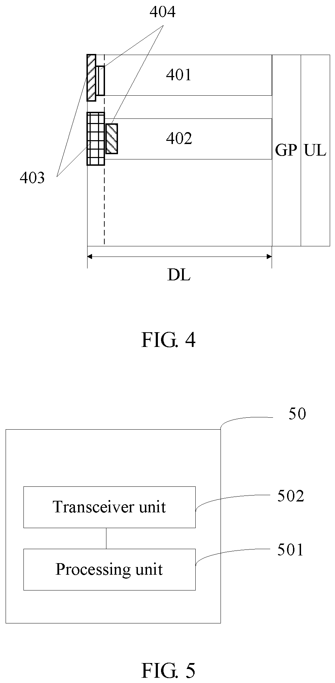

FIG. 4 is a structural block diagram of two levels of control channels for downlink transmission. DL (Downlink) indicates a downlink area; GP (Guard Period, guard period) is a guard period between a downlink and an uplink; and UL (uplink) indicates an uplink area. 401 represents a data area of a terminal device 1; 402 represents a data area of a terminal device 2; the terminal device 1 and the terminal device 2 are different terminal devices. 403 represents a first-level control channel that is used to carry index information that indicates a scheduled time-frequency resource; and 404 represents a second-level control channel that is used to carry information that indicates a transmission time value. The first-level control channel 403 is located in a control area (that is, a dashed area on a left side of a DL area in FIG. 3) of an entire downlink channel, and the second-level control channel 404 may be in the control area or a data area of the downlink channel. The control area is a downlink area that carries only control information used by a network device to schedule a terminal device, and the data area is a downlink area that is only used for data transmitted by the network device to the terminal device. For different terminal devices, start resource locations of the second-level control channel 404 may be different.

A structure of the two levels of control channels includes two levels of downlink control signaling. First-level downlink control signaling is sent on the first-level control channel 403, and includes information such as a user ID, resource allocation information, and a capacity of second-level downlink control signaling. The second-level downlink control signaling is sent on the second-level control channel 404, and includes information such as resource allocation information and information about a request for sending a sounding reference signal. The resource allocation information included in the first-level downlink control signaling is used to indicate a time-frequency resource location of the second-level downlink control signaling on the second-level control channel 404. A size of a time-frequency resource of the first-level control channel 403 is not equal to a size of a time-frequency resource of the second-level control channel 404, but the time-frequency resource of the second-level control channel 404 depends on scheduling indication information of the first-level downlink control signaling on the first-level control channel 403.

203. The terminal device receives the downlink control signaling.

After receiving the downlink control signaling including the indication information and the resource allocation information, the terminal device obtains the resource allocation information used for explicit indication or implicit indication of the uplink control channel resource and the indication information used to indicating whether the indication manner of the resource allocation information is explicit indication or implicit indication.

The terminal device receives the indication message carried by the first information bit in the downlink control signaling, or the terminal device descrambles the indication information carried by a scrambling code used for the downlink control signaling. The terminal device receives the resource allocation information carried by the second information bit or the third information bit in the downlink control signaling.

204. The terminal device learns, based on the indication information, that the indication manner of the resource allocation information is explicit indication or implicit indication, and obtains the explicitly indicated or implicitly indicated uplink control channel resource based on the resource allocation information.

Optionally, if the indication information received by the terminal device is a first preset value, the terminal device learns that a resource corresponding to current data scheduling is an explicitly indicated PUCCH resource; and if the indication information is a second preset value, the terminal device learns that the resource corresponding to the current data scheduling is an implicitly indicated PUCCH resource. The first preset value and the second preset value are different. For example, the first preset value may be configured to be 01, the second preset value may be configured to be 00, and the like.

Optionally, if the received indication information indicates that the indication manner of the resource allocation information is explicit indication, the terminal device obtains, based on the second information bit in the received downlink control signaling, an index of an explicitly indicated resource corresponding to the terminal device. For example, if the second information bit in the downlink control signaling is configured to be 4 bits, that is, a quantity of terminal devices scheduled by the network device this time is a maximum of $2^4=16$, and indexes of corresponding resources are [0, 15]. The terminal device obtains a location of an explicitly indicated PUCCH resource based on Table 1 in one-to-one correspondence with the resource indexes [0, 15].

Optionally, if the received indication information indicates that the indication manner of the resource allocation information is implicit indication, the terminal device obtains, based on the third information bit in the received downlink control signaling, an index of an implicitly indicated resource corresponding to the terminal device. Optionally, the terminal device obtains, through calculation and based on a correlation established between a minimum value of an index of a CCE of a physical resource obtained from the received downlink control signaling and an index of an implicitly indicated PUCCH resource sub-block corresponding to the terminal device, a resource location corresponding to the resource sub-block.

In this example of the present invention, signaling for explicit indication and implicit indication of a PUCCH resource is semi-statically configured through higher layer signaling or predefined in the downlink control signaling for the terminal device, and a resource indication is dynamically configured based on a quantity of terminal devices scheduled for data, so that an uplink control channel resource can be appropriately planned and flexibly configured. Therefore, in a 5G communications system with relatively limited resources, use of resources can be maximized, and resource fragmentation can be reduced, so as to achieve a relatively desirable technical effect.

Another aspect of the examples of the present invention further provides a network device. As shown in FIG. 5, the network device 50 includes a processing unit 501 and a transceiver unit 502.

The processing unit 501 is configured to generate downlink control signaling, where the downlink control signaling includes indication information and resource allocation information, the resource allocation information is used for explicit indication or implicit indication of an uplink control channel resource, and the indication information is used to indicate whether an indication manner of the resource allocation information is explicit indication or implicit indication.

According to this example of the present invention, the uplink control channel resource includes at least one of a time domain resource, a frequency domain resource, or a code domain resource.

In a conventional method, all uplink control channel resources are PUCCH resources that are used by a terminal device in a PUCCH resource pool and that are implicitly indicated through downlink control signaling. Because these resources are reserved, they cannot be flexibly scheduled after being configured. In the method in this example of the present invention, a network side explicitly or implicitly indicates allocation of a PUCCH resource. Explicit indication indicates that a resource corresponding to a terminal device is directly indicated through signaling, and implicit indication indicates that: A correlation between resource information and the terminal device is established and a resource corresponding to the terminal device is indicated through the correlation. Specifically, an explicitly indicated PUCCH resource is a PUCCH resource that is directly indicated through indication information in downlink control signaling and that is used by the terminal device to perform HARQ ACK/NACK feedback; and an implicitly indicated PUCCH resource is a PUCCH resource that is indicated through a correlation established between resource information of a physical downlink control channel PDCCH and the terminal device and that is used by the terminal device to perform HARQ ACK/NACK feedback.

The downlink control signaling is used to allocate a resource occupied in downlink data transmission, and allocate a resource occupied for feedback of uplink response information. Information in the downlink control signaling includes resource information of a physical downlink control channel PDCCH, and further includes index information of a physical resource block (Physical Resource Block, PRB) occupied by downlink data.

Optionally, implicit indication means a PUCCH resource is obtained by using a function in which a minimum value of an index of a control channel element CCE occupied in a PDCCH is used as an inlet parameter. For example, Formula 1 is an example of an implicit indication for obtaining a PUCCH resource.

The processing unit 501 is configured to generate the indication information carried by a first information bit in the downlink control signaling, or the processing unit 501 is configured to generate the indication information carried by a scrambling code used to scramble the downlink control signaling.

All persons skilled in the art know that, more bit information included in the indication information in the downlink control signaling indicates more detailed resource location information of the terminal device, and inevitably, high signaling overheads are caused. Optionally, the processing unit 501 generates 1-bit indication information in the downlink control signaling. Because the indication information is only 1 bit, signaling overheads are greatly reduced, so as to improve resource utilization to a greatest extent.

The processing unit 501 is configured to generate the resource allocation information carried by a second information bit or a third information bit in the downlink control signaling.

Optionally, in the downlink control signaling generated by the processing unit 501, if the indication information indicates that the indication manner of the resource allocation information is explicit indication, the resource allocation information is configured to be in the second information bit in the downlink control signaling to indicate an index of an explicitly indicated resource corresponding to a terminal device. Optionally, if the second information bit in the downlink control signaling is configured to be 4 bits, a quantity of terminal devices scheduled by the network device this time is a maximum of $2^4=16$, and index information of resources corresponding to these terminal devices is [0, 15]. To be specific, when the network device performs current downlink scheduling, 4-bit resource allocation information is in one-to-one correspondence with the index information [0, 15] of the explicitly indicated PUCCH resources (as listed in Table 1), to indicate specific resource locations of the terminal devices.

Optionally, in the downlink control signaling generated by the processing unit 501, if the indication information indicates that the indication manner of the resource allocation information is implicit indication, the resource allocation information is configured to be in the third information bit in the downlink control signaling to indicate an index of an implicitly indicated resource corresponding to a terminal device. Optionally, if the third information bit in the downlink control signaling is configured to be 2 bits, the network device establishes a correlation between a minimum value of an index of a CCE corresponding to the downlink control signaling and an index of an implicitly indicated PUCCH resource sub-block corresponding to the terminal device.

The transceiver unit 502 is configured to send the downlink control signaling.

Optionally, the first information bit in the downlink control signaling may implicitly indicate information about the second information bit and the third information bit. If the downlink control signaling is in a single-level control channel for downlink transmission, the first information bit, the second information bit, and the third information bit in the downlink control signaling are independent from each other, and lengths of the second information bit and the third information bit are fixed. Optionally, the second information bit and the third information bit may be multiplexed to improve resource utilization, that is, the network device may configure the second information bit and the third information bit to be a same information bit. If the downlink control signaling is in two levels of control channels for downlink transmission, the first information bit in the downlink control signaling may be placed in a first-level control channel or in a second-level control channel, while the second information bit and the third information can be placed only in the second-level control channel. If the downlink control signaling is in the two levels of control channels for downlink transmission, and the first information bit is placed in the first-level control channel, the lengths of the second information bit and the third information bit may be variable; and if the first information bit is placed in the second-level control channel, the lengths of the second information bit and the third information bit can only be fixed. The single-level control channel means that a control channel on a downlink includes a control area, and the two levels of control channels mean that a control channel on a downlink includes two control areas.

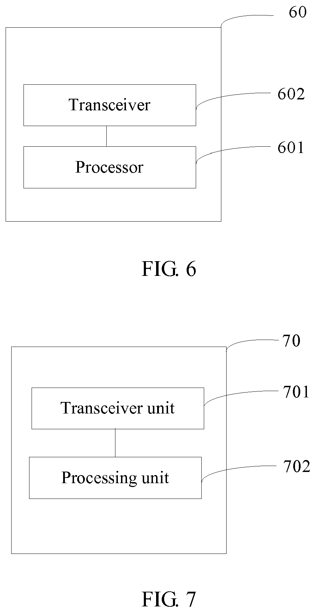

It should be noted that the network device 50 provided in this example of the present invention may perform various actions of the network device in the foregoing method example. The transceiver unit 502 is configured to perform a sending action and a receiving action of the network device in the foregoing method example, and the processing unit 501 is configured to perform processing actions such as obtaining and determining in the foregoing method example. In a physical implementation, the transceiver unit 502 may be a transceiver, and the processing unit 501 may be a processor. As shown in FIG. 6, 60 represents a network device, and the network device includes a processor 601 and a transceiver 602. The processor 601 and the transceiver 602 are connected together through various electronic line interfaces (for example, buses).

In this example of the present invention, signaling for explicit indication and implicit indication of a PUCCH resource is semi-statically configured through higher layer signaling or predefined in the downlink control signaling for the terminal device, and a resource indication is dynamically configured based on a quantity of terminal devices scheduled for data, so that an uplink control channel resource can be appropriately planned and flexibly configured. Therefore, in a 5G communications system with relatively limited resources, use of resources can be maximized, and resource fragmentation can be reduced, so as to achieve a relatively desirable technical effect.

Another aspect of the examples of the present invention further provides a terminal device. As shown in FIG. 7, the terminal device 70 includes a transceiver unit 701 and a processing unit 702.

The transceiver unit 701 is configured to receive downlink control signaling, where the downlink control signaling includes indication information and resource allocation information.

After receiving the downlink control signaling including the indication information and the resource allocation information, the transceiver unit 701 obtains the resource allocation information used for explicit indication or implicit indication of an uplink control channel resource and the indication information used to indicating whether an indication manner of the resource allocation information is explicit indication or implicit indication.

The transceiver unit 701 receives the indication message carried by a first information bit in the downlink control signaling, or descrambles, for the terminal device, the indication information carried by a scrambling code used for the downlink control signaling. The terminal device receives the resource allocation information carried by a second information bit or a third information bit in the downlink control signaling.

The processing unit 702 is configured to learn, based on the indication information, that the indication manner of the resource allocation information is explicit indication or implicit indication, and obtain the explicitly indicated or implicitly indicated uplink control channel resource based on the resource allocation information.

Optionally, if the indication information received by the transceiver unit 701 is a first preset value, the processing unit 702 learns that a resource corresponding to current data scheduling is an explicitly indicated PUCCH resource; and if the indication information is a second preset value, the processing unit 702 learns that the resource corresponding to the current data scheduling is an implicitly indicated PUCCH resource. The first preset value and the second preset value are different. For example, the first preset value may be configured to be 01, the second preset value may be configured to be 00, and the like.

Optionally, if the indication information received by the transceiver unit 701 indicates that the indication manner of the resource allocation information is explicit indication, the processing unit 702 obtains, based on the second information bit in the received downlink control signaling, an index of an explicitly indicated resource corresponding to the terminal device. For example, if the second information bit in the downlink control signaling is configured to be 4 bits, that is, a quantity of terminal devices scheduled by a network device this time is a maximum of $2^4=16$, and indexes of corresponding resources are [0, 15]. In this case, the processing unit 702 obtains a location of an explicitly indicated PUCCH resource based on Table 1 in one-to-one correspondence with the resource indexes [0, 15].

Optionally, if the indication information received by the transceiver unit 701 indicates that the indication manner of the resource allocation information is implicit indication, the processing unit 702 obtains, based on the third information bit in the received downlink control signaling, an index of an implicitly indicated resource corresponding to the terminal device. Optionally, the processing unit 702 obtains, based on a correlation established between a minimum value of an index of a CCE of a physical resource obtained from the received downlink control signaling and an index of an implicitly indicated PUCCH resource sub-block corresponding to the terminal device, a resource location corresponding to the resource sub-block.

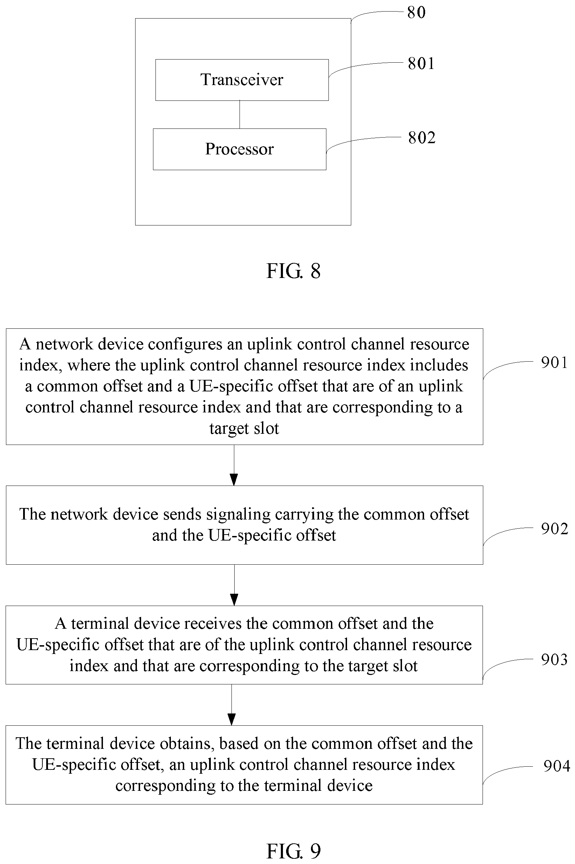

It should be noted that the terminal device 70 provided in this example of the present invention may perform various actions of the terminal device in the foregoing method example. The transceiver unit 701 is configured to perform a sending action and a receiving action of the terminal device in the foregoing method example, and the processing unit 702 is configured to perform processing actions of the terminal device such as obtaining and determining in the foregoing method example. In a physical implementation, the transceiver unit 701 may be a transceiver, and the processing unit 702 may be a processor. As shown in FIG. 8, 80 represents a terminal device, and the terminal device includes a processor 802 and a transceiver 801. The processor 802 and the transceiver 801 are connected together through various electronic line interfaces (for example, buses).

In this example of the present invention, signaling for explicit indication and implicit indication of a PUCCH resource is semi-statically configured through higher layer signaling or predefined in the downlink control signaling for the terminal device, and a resource indication is dynamically configured based on a quantity of terminal devices scheduled for data, so that an uplink control channel resource can be appropriately planned and flexibly configured. Therefore, in a 5G communications system with relatively limited resources, use of resources can be maximized, and resource fragmentation can be reduced, so as to achieve a relatively desirable technical effect.

Another aspect of the examples of the present invention further provides a resource indication and acquisition method. As shown in FIG. 9, the method includes the following steps:

901. A network device configures an uplink control channel resource index, where the uplink control channel resource index includes a common offset and a UE-specific offset that are of an uplink control channel resource index and that are corresponding to a target slot.

According to this example of the present invention, an uplink control channel resource includes at least one of a time domain resource, a frequency domain resource, or a code domain resource.

For a slot, because some PUCCH resources in the slot may have been occupied (for example, during data scheduling in a slot before the current slot, some PUCCH resources are allocated by the network device to a terminal device for use), and PUCCH resource occupancy statuses in slots are different, during data scheduling, the network device configures a PUCCH resource index for the terminal device. The PUCCH resource index includes a common offset (Common Offset) and a UE-specific offset that are of a PUCCH resource index and that are corresponding to a target slot. In different target slots, common offsets that are of a PUCCH resource index and that are corresponding to the different target slots are configured. Optionally, the network device may configure, in common scheduling signaling sent in downlink common search space (Common Search Space, CSS), common offsets that are of the PUCCH resource index and that are corresponding to different HARQ ACK/NACK timing information. The timing information means a fixed moment at which the terminal device feeds back HARQ ACK/NACK information in a slot corresponding to a moment after receiving downlink data. When the network device schedules an $n^{th}$ slot for performing data transmission, and the terminal device feeds back HARQ ACK/NACK information in an $(n+K)^{th}$ slot of current downlink data scheduling, K is a HARQ ACK/NACK timing value. n and K are integers greater than 0. After receiving timing information, the terminal device may learn of slot information of HARQ ACK/NACK feedback.

Optionally, the network device configures the common offset based on a resource occupancy status in the target slot. Optionally, the common offset of the PUCCH resource index is corresponding to an upper limit or a lower limit of the PUCCH resource index. The common offset of the PUCCH resource index is semi-statically configured through higher layer signaling or predefined by the network device.

When the common offset of the PUCCH resource index is configured to be the upper limit of the PUCCH resource index, a PUCCH resource index corresponding to the terminal device in the target slot is as follows:

$$\text{Resource index} = \text{common offset} - \text{specific-UE offset} \qquad \text{(Formula 2)}$$

When the common offset of the PUCCH resource index is configured to be the lower limit of the PUCCH resource index, the PUCCH resource index corresponding to the terminal device in the target slot is as follows:

$$\text{Resource index} = \text{common offset} + \text{specific-UE offset} \qquad \text{(Formula 3)}$$

The network device semi-statically configures through higher layer signaling or predefines downlink control signaling, to indicate whether the common offset of the PUCCH resource index is the upper limit or the lower limit of the corresponding PUCCH resource index. When the downlink control signaling indicates that the common offset of the PUCCH resource index is the upper limit, the terminal device obtains, by using Formula 2, a resource index belonging to the terminal device; and when the downlink control signaling indicates that the common offset of the PUCCH resource index is the lower limit, the terminal device obtains, by using Formula 3, a resource index belonging to the terminal device.

When there are a relatively large quantity of terminal devices scheduled for downlink data, to improve resource utilization, a corresponding common offset of a PUCCH resource index may be configured to be indicated by using a coarse granularity of the PUCCH resource index. To be specific, if there are a relatively large quantity of terminal devices within a period of time when the network device performs downlink data scheduling, a relatively large granularity of the common offset may be semi-statically configured; and if there are a relatively small quantity of terminal devices within a period of time when the network device performs downlink data scheduling, a relatively small granularity of the common offset may be semi-statically configured. Optionally, the network device configures the common offset of the PUCCH resource index for the terminal device by using a predetermined value as a granularity. The network device semi-statically configures through higher layer signaling or predefines the predetermined value. For example, when the network device configures a common offset of a PUCCH resource index for any one slot, the common offset may be configured to be $[0, i, 2i, 3i]$, where i indicates a granularity of the common offset of the PUCCH resource index, and i is a positive integer. The network device configures one value of corresponding common offsets $[0, i, 2i, 3i]$ of the PUCCH resource index for each slot based on a PUCCH resource occupancy status in the slot. The granularity i of the corresponding common offset of the PUCCH resource index is semi-statically configured through higher layer signaling or predefined by the network device.

902. The network device sends signaling carrying the common offset and the UE-specific offset.

Optionally, when performing downlink data scheduling, the network device notifies, through broadcast signaling, the terminal device of a configured common offset that is of a PUCCH resource index and that is corresponding to each slot. A frequency domain resource and a subcarrier spacing that are occupied by the broadcast signaling are semi-statically configured through higher layer signaling or predefined by the network device. Optionally, the network device performs notification in a broadcast mode in downlink common search space CSS.

After the common offset that is of the PUCCH resource index and that is corresponding to each slot is broadcast, the network device sends downlink control signaling. The downlink control signaling carries a UE-specific offset that is of a PUCCH resource index and that is corresponding to a target slot. A UE-specific offset of a PUCCH resource index is a specific offset corresponding to a common offset, in each slot, of a PUCCH resource index corresponding to each terminal device. UE-specific offsets, in all the slots, of the PUCCH resource index corresponding to the terminal device are different and may be dynamically configured, so that different PUCCH resources may be allocated to each terminal device for feeding back HARQ ACK/NACK information. The downlink control signaling includes indication information, which is used to explicitly and dynamically indicate the UE-specific offset of the PUCCH resource index corresponding to the terminal device.

903. The terminal device receives the common offset and the UE-specific offset that are of the uplink control channel resource index and that are corresponding to the target slot.

Optionally, after performing initial access, the terminal device starts to perform detection in the downlink common search space, and after detecting, on a broadcast channel, broadcast signaling that is broadcast by the network device and that includes a common offset of a PUCCH resource index corresponding to downlink data scheduling, the terminal device receives the broadcast signaling on the broadcast channel, so as to obtain the corresponding common offset of the PUCCH resource index.

Then, the terminal device receives the downlink control signaling sent by the network device, where the downlink control signaling carries the UE-specific offset that is of the PUCCH resource index and that is corresponding to the target slot. The downlink control signaling includes indication information, which is used to finely and dynamically indicate the UE-specific offset of the PUCCH resource index corresponding to the terminal device.

904. The terminal device obtains, based on the common offset and the UE-specific offset, an uplink control channel resource index corresponding to the terminal device.

When receiving the downlink control signaling from the network device, the terminal device detects, in the downlink scheduling signaling, corresponding timing information (that is, K) of HARQ ACK/NACK feedback. After detecting the timing information, the terminal device continues to detect the downlink control signaling, and learns, based on an indication that is semi-statically configured through higher layer signaling or predefined in the downlink control signaling, whether the common offset is an upper limit or a lower limit of the corresponding uplink control channel resource index. When the downlink control signaling indicates that the common offset of the PUCCH resource index is the upper limit, the terminal device obtains, by using Formula 2, a resource index belonging to the terminal device; and when the downlink control signaling indicates that the common offset of the PUCCH resource index is the lower limit, the terminal device obtains, by using Formula 3, a resource index belonging to the terminal device. Then, the terminal device finds, in a slot corresponding to the timing information, a PUCCH resource configured for the terminal device, and then feeds back the HARQ ACK/NACK information to the network device on the resource.

In this example of the present invention, the network device first configures, for the terminal device, common offsets and UE-specific offsets of a PUCCH resource index that are corresponding to HARQ ACK/NACKs in different slots, and then sends the common offsets and the UE-specific offsets to the terminal device in a signaling manner. The terminal device receives the signaling, and obtains, based on indication of the signaling, the PUCCH resource index belonging to the terminal device. In the method in this example of the present invention, the PUCCH resource index belonging to the terminal device is dynamically notified in a broadcast mode and through an indication message, so as to reduce resource fragmentation and improve resource utilization.

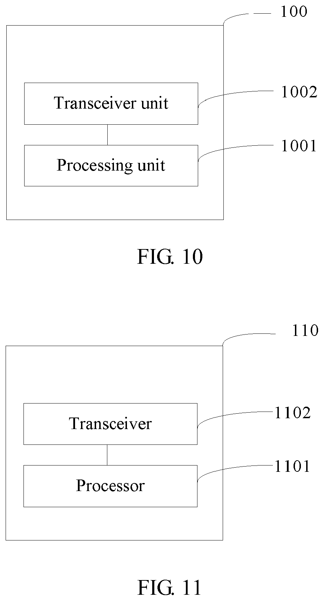

Another aspect of the examples of the present invention further provides a network device. As shown in FIG. 10, the network device 100 includes a processing unit 1001 and a transceiver unit 1002.

The processing unit 1001 is configured to configure an uplink control channel resource index, where the uplink control channel resource index includes a common offset and a UE-specific offset that are of an uplink control channel resource index and that are corresponding to a target slot.

For a slot, because some PUCCH resources in the slot may have been occupied (for example, during data scheduling in a slot before the current slot, some PUCCH resources are allocated by the network device to a terminal device for use), and PUCCH resource occupancy statuses in slots are different, during data scheduling, the processing unit 1001 configures a PUCCH resource index for the terminal device. The PUCCH resource index includes a common offset and a UE-specific offset that are of a PUCCH resource index and that are corresponding to a target slot. In different target slots, common offsets that are of a PUCCH resource index and that are corresponding to the different target slots are configured. Optionally, the processing unit 1001 may configure, in common scheduling signaling sent in downlink common search space CSS, common offsets that are of the PUCCH resource index and that are corresponding to different HARQ ACK/NACK timing information. The timing information means a fixed moment at which the terminal device feeds back HARQ ACK/NACK information in a slot corresponding to a moment after receiving downlink data. When the network device schedules an $n^{th}$ slot for performing data transmission, and the terminal device feeds back HARQ ACK/NACK information in an $(n+K)^{th}$ slot of current downlink data scheduling, K is a HARQ ACK/NACK timing value. n and K are integers greater than 0. After receiving timing information, the terminal device may learn of slot information of HARQ ACK/NACK feedback.

Optionally, the processing unit 1001 configures the common offset based on a resource occupancy status in the target slot. The processing unit 1001 configures that the common offset of the PUCCH resource index is corresponding to an upper limit or a lower limit of the PUCCH resource index. The common offset of the PUCCH resource index is semi-statically configured through higher layer signaling or predefined by the processing unit 801.

When the processing unit 1001 configures the common offset of the PUCCH resource index to be the upper limit of the PUCCH resource index, a PUCCH resource index corresponding to the terminal device in the target slot is obtained by using Formula 2.

When the processing unit 1001 configures the common offset of the PUCCH resource index to be the lower limit of the PUCCH resource index, a PUCCH resource index corresponding to the terminal device in the target slot is obtained by using Formula 3.

The processing unit 1001 semi-statically configures through higher layer signaling or predefines downlink control signaling, to indicate whether the common offset of the PUCCH resource index is the upper limit or the lower limit of the corresponding PUCCH resource index. When the downlink control signaling indicates that the common offset of the PUCCH resource index is the upper limit, the terminal device obtains, by using Formula 2, a resource index belonging to the terminal device; and when the downlink control signaling indicates that the common offset of the PUCCH resource index is the lower limit, the terminal device obtains, by using Formula 3, a resource index belonging to the terminal device.

When there are a relatively large quantity of terminal devices scheduled for downlink data, to improve resource utilization, a corresponding common offset of a PUCCH resource index may be configured by the processing unit 1001 to be indicated by using a coarse granularity of the PUCCH resource index. To be specific, if there are a relatively large quantity of terminal devices within a period of time when the network device performs downlink data scheduling, the processing unit 1001 may semi-statically configure a relatively large granularity of the common offset; and if there are a relatively small quantity of terminal devices within a period of time when the network device performs downlink data scheduling, the processing unit 1001 may semi-statically configure a relatively small granularity of the common offset. Optionally, the processing unit 1001 configures the common offset of the PUCCH resource index for the terminal device by using a predetermined value as a granularity. The processing unit 1001 semi-statically configures through higher layer signaling or predefines the predetermined value. For example, when the processing unit 1001 configures a common offset of a PUCCH resource index for any one slot, the common offset may be configured to be [0, i, 2i, 3i], where i indicates a granularity of the common offset of the PUCCH resource index, and i is a positive integer. The processing unit 1001 configures one value of corresponding common offsets [0, i, 2i, 3i] of the PUCCH resource index for each slot based on a PUCCH resource occupancy status in the slot. The granularity i of the corresponding common offset of the PUCCH resource index is semi-statically configured through higher layer signaling or predefined by the processing unit 1001.

The transceiver unit 1002 is configured to send signaling carrying the common offset and the UE-specific offset.

Optionally, when the network device performs downlink data scheduling, the transceiver unit 1002 notifies, through broadcast signaling, the terminal device of a common offset, configured by the processing unit 1001 and corresponding to each slot, of a PUCCH resource index. A frequency domain resource and a subcarrier spacing that are occupied by the broadcast signaling are semi-statically configured through higher layer signaling or predefined by the processing unit 1001. Optionally, the transceiver unit 1002 performs notification in a broadcast mode in downlink common search space CSS.

After the common offset that is of the PUCCH resource index and that is corresponding to each slot is broadcast, the transceiver unit 1002 continues to send downlink control signaling. The downlink control signaling carries a UE-specific offset that is of a PUCCH resource index and that is corresponding to a target slot. A UE-specific offset of a PUCCH resource index is a specific offset corresponding to a common offset, in each slot, of a PUCCH resource index corresponding to each terminal device. UE-specific offsets, in all the slots, of the PUCCH resource index corresponding to the terminal device are different and may be dynamically configured, so that different PUCCH resources may be allocated to each terminal device for feeding back HARQ ACK/NACK information.

The downlink control signaling includes indication information. Optionally, the processing unit 1001 explicitly and dynamically indicates, through indication information, the UE-specific offset of the PUCCH resource index corresponding to the terminal device.

It should be noted that the network device 100 provided in this embodiment of the present invention may perform various actions of the network device in the foregoing method embodiment. The transceiver unit 1002 is configured to perform a sending action and a receiving action of the network device in the foregoing method embodiment, and the processing unit 1001 is configured to perform processing actions such as obtaining and determining in the foregoing method embodiment. In a physical implementation, the transceiver unit 1002 may be a transceiver, and the processing unit 1001 may be a processor. As shown in FIG. 11, the network device 110 includes a processor 1101 and a transceiver 1102, and the processor 1101 and the transceiver 1102 are connected together through various electronic line interfaces (for example, buses).

In this example of the present invention, the processing unit first configures, for the terminal device in the common search space, common offsets of a PUCCH resource index that are corresponding to HARQ ACK/NACKs in different slots; the transceiver unit provides a notification for each terminal device through broadcast information; and the processing unit indicates, in the downlink control signaling, the PUCCH resource index belonging to the terminal device. The network device in this example of the present invention dynamically provides a notification about the PUCCH resource index belonging to the terminal device in a broadcast mode and through an indication message, so as to reduce resource fragmentation and improve resource utilization.

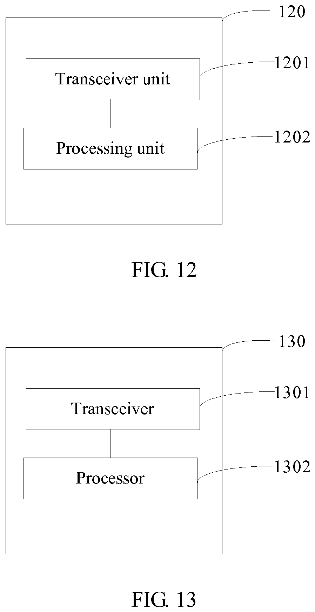

Another aspect of the examples of the present invention further provides a terminal device. As shown in FIG. 12, the terminal device 120 includes a transceiver unit 1201 and a processing unit 1202.

The transceiver unit 1201 is configured to receive a common offset and a UE-specific offset that are of an uplink control channel resource index and that are corresponding to a target slot.

Optionally, after the terminal device performs initial access, the transceiver unit 1201 starts to perform detection on a broadcast channel in downlink common search space, and after detecting, on the broadcast channel, broadcast signaling that is broadcast by a network device and that includes a common offset of a PUCCH resource index corresponding to downlink data scheduling, the transceiver unit 1201 receives the broadcast signaling on the broadcast channel, so as to obtain the corresponding common offset of the PUCCH resource index.

Then, the transceiver unit 1201 receives the downlink control signaling sent by the network device, where the downlink control signaling carries the UE-specific offset that is of the PUCCH resource index and that is corresponding to the target slot. A UE-specific offset of a PUCCH resource index is a specific offset corresponding to a common offset, in each slot, of a PUCCH resource index corresponding to each terminal device. UE-specific offsets, in all the slots, of the PUCCH resource index corresponding to the terminal device are different and may be dynamically configured, so that different PUCCH resources may be allocated to each terminal device for feeding back HARQ ACK/NACK information.

In addition, the downlink control signaling received by the transceiver unit 1201 further includes indication information, which is used to explicitly and dynamically indicate the UE-specific offset of the PUCCH resource index corresponding to the terminal device.

The processing unit 1202 obtains, based on the common offset and the UE-specific offset, an uplink control channel resource index corresponding to the terminal device.

When receiving the downlink control signaling from the network device, the transceiver unit 1201 detects, in the downlink scheduling signaling, corresponding timing information (that is, K) of HARQ ACK/NACK feedback. After detecting the timing information, the transceiver unit 1201 continues to detect the downlink control signaling, and the processing unit 1202 learns, based on an indication that is semi-statically configured through higher layer signaling or predefined in the downlink control signaling, whether the common offset is an upper limit or a lower limit of the corresponding uplink control channel resource index. When the downlink control signaling indicates that the common offset of the PUCCH resource index is the upper limit, the processing unit 1202 obtains, by using Formula 2, a resource index belonging to the terminal device; and when the downlink control signaling indicates that the common offset of the PUCCH resource index is the lower limit, the processing unit 1202 obtains, by using Formula 3, a resource index belonging to the terminal device. Then, the processing unit 1202 finds, in a slot corresponding to the timing information, a PUCCH resource configured for the terminal device, and then the transceiver unit 1201 feeds back the HARQ ACK/NACK information to the network device on the resource.

It should be noted that the terminal device 120 provided in this example of the present invention may perform various actions of the terminal device in the foregoing method example. The transceiver unit 1201 is configured to perform a sending action and a receiving action of the terminal device in the foregoing method example, and the processing unit 1202 is configured to perform processing actions of the terminal device such as obtaining and determining in the foregoing method example. In a physical implementation, the transceiver unit 1201 may be a transceiver, and the processing unit 1202 may be a processor. As shown in FIG. 13, the terminal device 130 includes a processor 1302 and a transceiver 1301, and the processor 1302 and the transceiver 1301 are connected together through various electronic line interfaces (for example, buses).

In this example of the present invention, the transceiver unit receives the common offset and the UE-specific offset by receiving signaling, and the processing unit obtains, based on the common offset and the UE-specific offset, the PUCCH resource index corresponding to the terminal device. The terminal device in this example of the present invention dynamically searches, in a broadcast mode and through an indication message, for the PUCCH resource index belonging to the terminal device, so as to reduce resource fragmentation and improve resource utilization.

All or some of the foregoing examples may be implemented through software, hardware, firmware, or any combination thereof. When software is used to implement the examples, the examples may be implemented completely or partially in a form of a computer program product. The computer program product includes one or more computer instructions. When the computer program instruction is loaded and executed on a computer, the procedure or functions according to the examples of the present invention are all or partially generated. The computer may be a general-purpose computer, a dedicated computer, a computer network, or other programmable apparatuses. The computer instruction may be stored in a computer-readable storage medium or may be transmitted from a computer-readable storage medium to another computer-readable storage medium. For example, the computer instruction may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, DVD), a semiconductor medium (for example, a solid state disk Solid State Disk (SSD)), or the like.

The foregoing descriptions are merely specific implementations of the present invention. The protection scope of the present invention shall be subject to the protection scope of the claims.

## Claims

1. A resource indication method, comprising:

   generating (201), by a network device, downlink control signaling, wherein the downlink control signaling comprises indication information and resource allocation information, the resource allocation information is used for explicit indication or implicit indication of an uplink control channel resource, and the indication information is used to indicate whether an indication manner of the resource allocation information is explicit indication or implicit indication; and
   sending (202), by the network device, the downlink control signaling to a terminal,

wherein an explicitly indicated UL control channel resource is an UL control channel resource directly indicated through signaling,

wherein an implicitly indicated UL control channel resource is an UL control channel resource indicated through a correlation established between resource information and the terminal device,

wherein the indication information is carried by a scrambling code used to scramble the downlink control signaling, and

wherein the resource allocation information is carried by a second information bit or a third information bit in the downlink control signaling.

2. The method according to claim 1, wherein the uplink control channel resource comprises at least one of a time domain resource, a frequency domain resource, or a code domain resource.

3. A resource acquisition method, comprising:

receiving (203), by a terminal device, downlink control signaling, wherein the downlink control signaling comprises indication information and resource allocation information, wherein the receiving (203), by the terminal device, the downlink control signaling further comprises: receiving, by the terminal device, the indication information carried by a scrambling code used for the downlink control signaling, wherein the receiving, by the terminal device, the downlink control signaling further comprises: receiving, by the terminal device, the resource allocation information carried by a second information bit or a third information bit in the downlink control signaling, wherein an explicitly indicated UL control channel resource is an UL control channel resource directly indicated through signaling,

wherein an implicitly indicated UL control channel resource is an UL control channel resource indicated through a correlation established between resource information and the terminal device, and

learning (204), by the terminal device based on the indication information, that an indication manner of the resource allocation information is explicit indication or implicit indication, and obtaining an explicitly indicated or implicitly indicated uplink control channel resource based on the resource allocation information,

4. The method according to claim 3, wherein the uplink control channel resource comprises at least one of a time domain resource, a frequency domain resource, or a code domain resource.

5. The method according to claim 3, wherein
the method further comprises: feeding back, by the terminal device on the uplink control channel resource, response information of downlink data.

6. A network device (50), comprising:
a processing unit (501), configured to generate downlink control signaling, wherein the downlink control signaling comprises indication information and resource allocation information, the resource allocation information is used for explicit indication or implicit indication of an uplink control channel resource, and the indication information is used to indicate whether an indication manner of the resource allocation information is explicit indication or implicit indication, wherein the processing unit (501) is further configured to:

generate the indication information carried by a scrambling code used to scramble the downlink control signaling; wherein the processing unit (501) is further configured to: generate the resource allocation information carried by a second information bit or a third information bit in the downlink control signaling;

wherein an explicitly indicated UL control channel resource is an UL control channel resource directly indicated through signaling,

wherein an implicitly indicated UL control channel resource is an UL control channel resource indicated through a correlation established between resource information and the terminal device; and

a transceiver unit (502), configured to send the downlink control signaling to a terminal.

7. The network device (50) according to claim 6, wherein the uplink control channel resource comprises at least one of a time domain resource, a frequency domain resource, or a code domain resource.

8. A terminal device (70), comprising:

a transceiver unit (701), configured to receive downlink control signaling, wherein the downlink control signaling comprises indication information and resource allocation information, wherein the indication information is carried by a scrambling code used to scramble the downlink control signaling, wherein the resource allocation information is carried by a second information bit or a third information bit in the downlink control signaling,
wherein an explicitly indicated UL control channel resource is an UL control channel resource directly indicated through signaling,
wherein an implicitly indicated UL control channel resource is an UL control channel resource indicated through a correlation established between resource information and the terminal device; and
a processing unit (702), configured to learn, based on the indication information, that an indication manner of the resource allocation information is explicit indication or implicit indication, and obtain an explicitly indicated or implicitly indicated uplink control channel resource based on the resource allocation information.

9. The terminal device (70) according to claim 8, wherein the uplink control channel resource comprises at least one of a time domain resource, a frequency domain resource, or a code domain resource.

**Patentansprüche**

1. Ressourcenanzeigeverfahren, das Folgendes umfasst:

   Erzeugen (201), durch eine Netzwerkvorrichtung, einer Downlink-Steuersignalisierung, wobei die Downlink-Steuersignalisierung Anzeigeinformationen und Ressourcenzuteilungsinformationen umfasst, die Ressourcenzuteilungsinformationen für die explizite Anzeige oder die implizite Anzeige einer Uplink-Steuerkanalressource verwendet werden und die Anzeigeinformationen verwendet werden, um anzuzeigen, ob eine Anzeigeweise der Ressourcenzuteilungsinformationen die explizite Anzeige oder die implizite Anzeige ist; und
   Senden (202), durch die Netzwerkvorrichtung, der Downlink-Steuersignalisierung an ein Terminal,
   wobei eine explizit angezeigte UL-Steuerkanalressource eine UL-Steuerkanalressource ist, die direkt durch die Signalisierung angezeigt wird,
   wobei eine implizit angezeigte UL-Steuerkanalressource eine UL-Steuerkanalressource ist, die durch eine Korrelation angezeigt wird, die zwischen Ressourceninformationen und dem Endgerät hergestellt wird,
   wobei die Anzeigeinformationen durch einen Verwürfelungscode getragen werden, der verwendet wird, um die Downlink-Steuersignalisierung zu verwürfeln, und
   wobei die Ressourcenzuteilungsinformationen durch ein zweites Informationsbit oder ein drittes Informationsbit in der Downlink-Steuersignalisierung getragen werden.

2. Verfahren nach Anspruch 1, wobei die Uplink-Steuerkanalressource eine Zeitdomänenressource, eine Frequenzdomänenressource und/oder eine Codedomänenressource umfasst.

3. Ressourcenerfassungsverfahren, das Folgendes umfasst:

   Empfangen (203), durch ein Endgerät, der Downlink-Steuersignalisierung, wobei die Downlink-Steuersignalisierung Anzeigeinformationen und Ressourcenzuteilungsinformationen umfasst, wobei das Empfangen (203), durch das Endgerät, der Downlink-Steuersignalisierung ferner Folgendes umfasst: Empfangen, durch das Endgerät, der Anzeigeinformationen, die durch einen Verwürfelungscode getragen werden, der für die Downlink-Steuersignalisierung verwendet wird, wobei das Empfangen, durch das Endgerät, der Downlink-Steuersignalisierung ferner Folgendes umfasst: Empfangen, durch das Endgerät, der Ressourcenzuteilungsinformationen, die durch ein zweites Informationsbit oder ein drittes Informationsbit in der Downlink-Steuersignalisierung getragen werden,
   wobei eine explizit angezeigte UL-Steuerkanalressource eine UL-Steuerkanalressource ist, die direkt durch die Signalisierung angezeigt wird,
   wobei eine implizit angezeigte UL-Steuerkanalressource eine UL-Steuerkanalressource ist, die durch eine Korrelation angezeigt wird, die zwischen Ressourceninformationen und dem Endgerät hergestellt wird, und
   Lernen (204), durch das Endgerät basierend auf den Anzeigeinformationen, dass eine Anzeigeweise der Ressourcenzuteilungsinformationen die explizite Anzeige oder die implizite Anzeige ist, und Erhalten einer explizit angezeigten oder einer implizit angezeigten Uplink-Steuerkanalressource basierend auf den Ressourcenzuteilungsinformationen.

4. Verfahren nach Anspruch 3, wobei die Uplink-Steuerkanalressource eine Zeitdomänenressource, eine Frequenzdomänenressource und/oder eine Codedomänenressource umfasst.

**5.** Verfahren nach Anspruch 3, wobei
das Verfahren ferner Folgendes umfasst: Rückmelden, durch das Endgerät auf der Uplink-Steuerkanalressource, von Antwortinformationen von Downlink-Daten.

**6.** Netzwerkvorrichtung (50), die Folgendes umfasst:
eine Verarbeitungseinheit (501), die konfiguriert ist, um die Downlink-Steuersignalisierung zu erzeugen, wobei die Downlink-Steuersignalisierung Anzeigeinformationen und Ressourcenzuteilungsinformationen umfasst, die Ressourcenzuteilungsinformationen für die explizite Anzeige oder die implizite Anzeige einer Uplink-Steuerkanalressource verwendet werden und die Anzeigeinformationen verwendet werden, um anzuzeigen, ob eine Anzeigeweise der Ressourcenzuteilungsinformationen die explizite Anzeige oder die implizite Anzeige ist, wobei die Verarbeitungseinheit (501) ferner zu Folgendem konfiguriert ist:

Erzeugen der Anzeigeinformationen, die durch einen Verwürfelungscode getragen werden, der verwendet wird, um die Downlink-Steuersignalisierung zu verwürfeln; wobei die Verarbeitungseinheit (501) ferner zu Folgendem konfiguriert ist: Erzeugen der Ressourcenzuteilungsinformationen, die durch ein zweites Informationsbit oder ein drittes Informationsbit in der Downlink-Steuersignalisierung getragen werden;
wobei eine explizit angezeigte UL-Steuerkanalressource eine UL-Steuerkanalressource ist, die direkt durch die Signalisierung angezeigt wird,
wobei eine implizit angezeigte UL-Steuerkanalressource eine UL-Steuerkanalressource ist, die durch eine Korrelation angezeigt wird, die zwischen Ressourceninformationen und dem Endgerät hergestellt wird; und
eine Sendeempfängereinheit (502), die konfiguriert ist, um die Downlink-Steuersignalisierung an ein Terminal zu senden.

**7.** Netzwerkvorrichtung (50) nach Anspruch 6, wobei die Uplink-Steuerkanalressource eine Zeitdomänenressource, eine Frequenzdomänenressource und/oder eine Codedomänenressource umfasst.

**8.** Endgerät (70), das Folgendes umfasst:

eine Sendeempfängereinheit (701), die konfiguriert ist, um die Downlink-Steuersignalisierung zu empfangen, wobei die Downlink-Steuersignalisierung Anzeigeinformationen und Ressourcenzuteilungsinformationen umfasst, wobei die Anzeigeinformationen durch einen Verwürfelungscode getragen werden, der verwendet wird, um die Downlink-Steuersignalisierung zu verwürfeln, wobei die Ressourcenzuteilungsinformationen durch ein zweites Informationsbit oder ein drittes Informationsbit in der Downlink-Steuersignalisierung getragen werden, wobei eine explizit angezeigte UL-Steuerkanalressource eine UL-Steuerkanalressource ist, die direkt durch die Signalisierung angezeigt wird,
wobei eine implizit angezeigte UL-Steuerkanalressource eine UL-Steuerkanalressource ist, die durch eine Korrelation angezeigt wird, die zwischen Ressourceninformationen und dem Endgerät hergestellt wird; und
eine Verarbeitungseinheit (702), die konfiguriert ist, um basierend auf den Anzeigeinformationen zu lernen, dass eine Anzeigeweise der Ressourcenzuteilungsinformationen die explizite Anzeige oder die implizite Anzeige ist, und eine explizit angezeigte oder eine implizit angezeigte Uplink-Steuerkanalressource basierend auf den Ressourcenzuteilungsinformationen zu erhalten.

**9.** Endgerät (70) nach Anspruch 8, wobei die Uplink-Steuerkanalressource eine Zeitdomänenressource, eine Frequenzdomänenressource und/oder eine Codedomänenressource umfasst.

**Revendications**

**1.** Procédé d'indication de ressource, comprenant :

la génération (201), par un dispositif réseau, d'une signalisation de commande de liaison descendante, dans lequel la signalisation de commande de liaison descendante comprend des informations d'indication et des informations d'allocation de ressources, les informations d'allocation de ressources sont utilisées pour une indication explicite ou une indication implicite d'une ressource de canal de commande de liaison montante, et les informations d'indication sont utilisées pour indiquer si un mode d'indication des informations d'allocation de ressources est une indication explicite ou une indication implicite ; et
l'envoi (202), par le dispositif réseau, de la signalisation de commande de liaison descendante à un terminal, dans lequel une ressource de canal de commande UL explicitement indiquée est une ressource de canal de commande UL directement indiquée par la signalisation,
dans lequel une ressource de canal de commande UL indiquée implicitement est une ressource de canal de commande UL indiquée par l'intermédiaire d'une corrélation établie entre les informations de ressources et le dispositif terminal,
dans lequel les informations d'indication sont transportées par un code de brouillage utilisé pour brouiller la signalisation de commande de liaison descendante, et
dans lequel les informations d'allocation de ressources sont transportées par un deuxième bit d'informations ou un troisième bit d'informations dans la signalisation de commande de liaison descendante.

2. Procédé selon la revendication 1, dans lequel la ressource de canal de commande de liaison montante comprend une ressource de domaine temporel, et/ou une ressource de domaine fréquentiel et/ou une ressource de domaine de code.

3. Procédé d'acquisition de ressources, comprenant :

la réception (203), par un dispositif terminal, d'une signalisation de commande de liaison descendante, dans lequel la signalisation de commande de liaison descendante comprend des informations d'indication et des informations d'allocation de ressources, dans lequel la réception (203), par le dispositif terminal, de la signalisation de commande de liaison descendante comprend en outre : la réception, par le dispositif terminal, des informations d'indication transportées par un code de brouillage utilisé pour la signalisation de commande de liaison descendante, dans lequel la réception, par le dispositif terminal, de la signalisation de commande de liaison descendante comprend en outre : la réception, par le dispositif terminal, des informations d'allocation de ressources transportées par un deuxième bit d'informations ou un troisième bit d'informations dans la signalisation de commande de liaison descendante,
dans lequel une ressource de canal de commande UL explicitement indiquée est une ressource de canal de commande UL directement indiquée par la signalisation,
dans lequel une ressource de canal de commande UL indiquée implicitement est une ressource de canal de commande UL indiquée par l'intermédiaire d'une corrélation établie entre les informations de ressources et le dispositif terminal, et
le fait d'apprendre (204), par le dispositif terminal sur la base des informations d'indication, qu'un mode d'indication des informations d'allocation de ressources est une indication explicite ou une indication implicite, et l'obtention d'une ressource de canal de commande de liaison montante explicitement indiquée ou implicitement indiquée sur la base des informations d'allocation de ressources,

4. Procédé selon la revendication 3, dans lequel la ressource de canal de commande de liaison montante comprend une ressource de domaine temporel, et/ou une ressource de domaine fréquentiel et/ou une ressource de domaine de code.

5. Procédé selon la revendication 3, dans lequel
le procédé comprend en outre : la rétroaction, par le dispositif terminal sur la ressource de canal de commande de liaison montante, d'informations de réponse de données de liaison descendante.

6. Dispositif réseau (50), comprenant :
une unité de traitement (501), configurée pour générer une signalisation de commande de liaison descendante, dans lequel la signalisation de commande de liaison descendante comprend des informations d'indication et des informations d'allocation de ressources, les informations d'allocation de ressources sont utilisées pour une indication explicite ou une indication implicite d'une ressource de canal de commande de liaison montante, et les informations d'indication sont utilisées pour indiquer si un mode d'indication des informations d'allocation de ressources est une indication explicite ou une indication implicite, dans lequel l'unité de traitement (501) est en outre configurée pour :

générer les informations d'indication transportées par un code de brouillage utilisé pour brouiller la signalisation de commande de liaison descendante ; dans lequel l'unité de traitement (501) est en outre configurée pour : générer les informations d'allocation de ressources transportées par un deuxième bit d'informations ou un troisième bit d'informations dans la signalisation de commande de liaison descendante ;
dans lequel une ressource de canal de commande UL explicitement indiquée est une ressource de canal de commande UL directement indiquée par la signalisation,
dans lequel une ressource de canal de commande UL indiquée implicitement est une ressource de canal de commande UL indiquée par l'intermédiaire d'une corrélation établie entre les informations de ressources et le dispositif terminal ; et
une unité d'émetteur-récepteur (502), configurée pour envoyer la signalisation de commande de liaison descendante à un terminal.

**7.** Dispositif réseau (50) selon la revendication 6, dans lequel la ressource de canal de commande de liaison montante comprend une ressource de domaine temporel, et/ou une ressource de domaine fréquentiel et/ou une ressource de domaine de code.

**8.** Dispositif terminal (70), comprenant :

une unité d'émetteur-récepteur (701), configurée pour recevoir une signalisation de commande de liaison descendante, dans lequel la signalisation de commande de liaison descendante comprend des informations d'indication et des informations d'allocation de ressources, dans lequel les informations d'indication sont transportées par un code de brouillage utilisé pour brouiller la signalisation de commande de liaison descendante, dans lequel les informations d'allocation de ressources sont transportées par un deuxième bit d'informations ou un troisième bit d'informations dans la signalisation de commande de liaison descendante,
dans lequel une ressource de canal de commande UL explicitement indiquée est une ressource de canal de commande UL directement indiquée par la signalisation,
dans lequel une ressource de canal de commande UL indiquée implicitement est une ressource de canal de commande UL indiquée par l'intermédiaire d'une corrélation établie entre les informations de ressources et le dispositif terminal ; et
une unité de traitement (702), configurée pour apprendre, sur la base des informations d'indication, qu'un mode d'indication des informations d'allocation de ressources est une indication explicite ou une indication implicite, et obtenir une ressource de canal de commande de liaison montante explicitement indiquée ou implicitement indiquée sur la base des informations d'allocation de ressources.

**9.** Dispositif terminal (70) selon la revendication 8, dans lequel la ressource de canal de commande de liaison montante comprend une ressource de domaine temporel, et/ou une ressource de domaine fréquentiel et/ou une ressource de domaine de code.

FIG. 1

A network device generates downlink control signaling, where the downlink control signaling includes indication information and resource allocation information, the resource allocation information is used for explicit indication or implicit indication of an uplink control channel resource, and the indication information is used to indicate that an indication manner of the resource allocation information is explicit indication or implicit indication — 201

The network device sends the downlink control signaling — 202

A terminal device receives the downlink control signaling — 203

The terminal device learns, based on the indication information, that the indication manner of the resource allocation information is explicit indication or implicit indication, and obtains the explicitly indicated or implicitly indicated uplink control channel resource based on the resource allocation information — 204

FIG. 2

FIG. 3

404

401

404

403

402

GP | UL

DL

**FIG. 4**

50

Transceiver unit — 502

Processing unit — 501

**FIG. 5**

FIG. 6

FIG. 7

FIG. 8

A network device configures an uplink control channel resource index, where the uplink control channel resource index includes a common offset and a UE-specific offset that are of an uplink control channel resource index and that are corresponding to a target slot ⟋ 901

The network device sends signaling carrying the common offset and the UE-specific offset ⟋ 902

A terminal device receives the common offset and the UE-specific offset that are of the uplink control channel resource index and that are corresponding to the target slot ⟋ 903

The terminal device obtains, based on the common offset and the UE-specific offset, an uplink control channel resource index corresponding to the terminal device ⟋ 904

FIG. 9

100

| Transceiver unit | — 1002 |
|---|---|
| Processing unit | — 1001 |

FIG. 10

110

| Transceiver | —1102 |
|---|---|
| Processor | —1101 |

FIG. 11

120

Transceiver unit — 1201

Processing unit — 1202

FIG. 12

130

Transceiver — 1301

Processor — 1302

FIG. 13

**EP 3 562 082 B1**

**Patent documents cited in the description**

- US 20150103703 A1
- WO 2012094151 A2